(19) Europäisches Patentamt / European Patent Office / Office européen des brevets

(11) **EP 3 907 579 B1**

(12) **EUROPÄISCHE PATENTSCHRIFT**

(45) Veröffentlichungstag und Bekanntmachung des Hinweises auf die Patenterteilung:
**23.04.2025   Patentblatt 2025/17**

(21) Anmeldenummer: **21172540.3**

(22) Anmeldetag: **06.05.2021**

(51) Internationale Patentklassifikation (IPC):
**G05D 23/19** (2006.01)   **F24D 19/10** (2006.01)
**F24H 15/254** (2022.01)   **F24H 15/258** (2022.01)
**F24H 15/269** (2022.01)   **F24H 15/355** (2022.01)
**F24H 15/375** (2022.01)   F24H 15/128 (2022.01)
F24H 15/156 (2022.01)   F24H 15/172 (2022.01)
F24H 15/176 (2022.01)   F24H 15/262 (2022.01)
F24H 15/281 (2022.01)   F24H 15/335 (2022.01)
F24H 15/414 (2022.01)   F24H 15/45 (2022.01)

(52) Gemeinsame Patentklassifikation (CPC):
**G05D 23/1934; F24D 19/1009; F24H 15/254;**
**F24H 15/258; F24H 15/269; F24H 15/355;**
**F24H 15/375;** F24H 15/128; F24H 15/156;
F24H 15/172; F24H 15/176; F24H 15/262;
F24H 15/281; F24H 15/335; F24H 15/414;   (Forts.)

(54) **SYSTEM UND VERFAHREN ZUM BETREIBEN EINER HEIZUNGSEINHEIT IN EINEM GEBÄUDE MIT EINEM ODER MEHREREN ZU HEIZENDEN RÄUMEN**

SYSTEM AND METHOD FOR OPERATING A HEATING UNIT IN A BUILDING WITH ONE OR MORE ROOMS TO BE HEATED

SYSTÈME ET PROCÉDÉ DE FONCTIONNEMENT D'UNE UNITÉ DE CHAUFFAGE DANS UN BÂTIMENT DOTÉ D'AU MOINS UNE PIÈCE À CHAUFFER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2020   DE 102020205837**

(43) Veröffentlichungstag der Anmeldung:
**10.11.2021   Patentblatt 2021/45**

(73) Patentinhaber: **Viessmann Holding International GmbH**
**35108 Allendorf (DE)**

(72) Erfinder: **STRUBEL, Jan**
**64319 Pfungstadt (DE)**

(74) Vertreter: **MERH-IP Matias Erny Reichl Hoffmann Patentanwälte PartG mbB**
**Paul-Heyse-Straße 29**
**80336 München (DE)**

(56) Entgegenhaltungen:
EP-A1- 2 555 074      EP-B1- 2 555 074
WO-A1-2012/095558    DE-A1- 102017 203 850
DE-A1- 19 710 853     DE-A1- 4 339 802

- **GREG MCMILLAN: "What Are the Merits of Options to avoid a Kick on a Setpoint Change Tips? | Control Global", 6 December 2012 (2012-12-06), XP093103856, Retrieved from the Internet <URL:https://www.controlglobal.com/home/blog/11338684/what-are-the-merits-of-options-to-avoid-a-kick-on-a-setpoint-change-tips> [retrieved on 20231121]**
- **JELLE KALSBEEK: "Strategies to avoid overshoot in PID Control - PID-tuner.com", 2 February 2024 (2024-02-02), XP093136740, Retrieved from the Internet <URL:https://www.pid-tuner.com/overshoot-in-pid-control/> [retrieved on 20240301]**

(52) Gemeinsame Patentklassifikation (CPC): (Forts.)
F24H 15/45; Y02B 30/70

## Beschreibung

## Technischer Hintergrund

Räume und Raumbereiche werden in einem Gebäude häufig sehr unterschiedlich genutzt. Entsprechend kann eine Solltemperatur von Raum zu Raum bzw. von Raumabschnitt zu Raumabschnitt variieren. Zusätzlich kann die Temperatur in einem Raum/Raumabschnitt im Wesentlichen von weiteren Einflüssen, wie Sonneneinstrahlung, Außentemperatur, Möbel und Gegenständen in den Räumen etc. beeinflusst werden. Dies stellt einige regeltechnische Herausforderungen an eine Heizungseinheit.

Außerdem ist es Aufgabe einer Heizungseinheit, möglichst zeitnah eine gewünschte Raumtemperatur zu erreichen, um unterschiedlichen Nutzungen eines Raums möglichst optimal gerecht zu werden. Insbesondere nach einer längeren Nicht-Nutzung eines Raumes, beispielsweise auf Grund von Urlaub, benötigt das Regeln der Temperatur in einem Raum häufig längere Zeit.

Die DE 197 10 853 A1 offenbart eine Heizungsanlage mit mehreren Heizstellen, denen - steuerbar über elektrische Stellventile - Wärmeerzeuger zugeordnet sind. Die Steuerung der Stellventile von den Heizstellen zugeordneten Raumtemperaturreglern, und die Steuerbefehle zwischen den Raumtemperaturreglern und den Stellventilen sowie Steuerbefehle zu einer zentralen Heizungssteuerung zur Heizleistungs-Erhöhung bzw. - Abschwächung erfolgen austauschbar über einen Datenbus.

Die EP 2 555 074 A1 beschreibt ein System, das ein Vorhandensein eines zentralen Temperatursensors für die Außen- oder Umgebungstemperatur ausnutzt, um eine dem Momentan-Bedarf entsprechende bedarfsabhängige Regelung bzw. Steuerung einer Heiz- oder Kühlleistung zu ermöglichen. Hierzu wird der Momentan-Bedarf ermittelt, beispielsweise über Werte eines oder mehrerer Thermostaten in Nutzungseinheiten oder in Stellgliedern für Heiz- oder Kühlelemente.

Die DE 43 39 802 A1 offenbart eine Einrichtung zum Steuern der Leistung eines Wärmeerzeugers in einer Warmwasser- Heizungsanlage. Der Wärmeerzeuger mit seiner Steuer- und Regeleinrichtung ist so ausgelegt, dass er ohne ein externes elektrisches Steuersignal völlig autark arbeitet. Er stellt den an ihn angeschlossenen Heizkörpern maximale Wärme bereit. Alle Überwachungseinrichtungen mit Regler-, Wächter- und Sicherheitsfunktionen, einschließlich der Drehzahlsteuerung einer Umwälzpumpe und eine etwaige Schadstoffüberwachung sind im Wärmeerzeuger integriert.

Die WO 2012/095 558 A1 beschreibt ein Verfahren, ein Einstellsystem und ein Computerprogrammprodukt zum Steuern eines Wärmeübertragungssystems. Das Wärmeübertragungssystem weist einen Vorlauf und einen Rücklauf und zwei oder mehr Heiz- oder Kühleinheiten auf.

Die DE 10 2017 203 850 A1 betrifft ein Verfahren zum Betreiben einer Heizungsanlage in einem Gebäude, insbesondere ein Verfahren zum hydraulischen Abgleich der Heizungsanlage.

Eine weitere Herausforderung für ein Betreiben einer Heizungseinheit ist ein ressourcenschonender Verbrauch von Wärme und Wärmeträgern.

Entsprechend ist es Aufgabe der Erfindung, ein System und Verfahren zum Betreiben einer Heizungseinheit in einem Gebäude mit einem oder mehreren zu heizenden Räumen zur Verfügung zu stellen.

## Beschreibung der Erfindung

Die Aufgabe wird mit den Merkmalen der unabhängigen Patentansprüche gelöst. Die abhängigen Patentansprüche beziehen sich auf besondere Ausführungsformen der Erfindung.

Ein erfindungsgemäßes System zum Betreiben einer Heizungseinheit in einem Gebäude mit einem oder mehreren zu heizenden Räumen umfasst mindestens einen Wärmeübertrager pro zu heizendem Raum, mindestens eine Wärmeerzeugungseinheit zum Erhitzen eines Trägermediums, das über einen Vorlauf (VL) zu dem mindestens einen Wärmeübertrager und über einen Rücklauf (RL) zur Wärmeerzeugungseinheit fließt.

Eine Heizungseinheit kann eine Wärmeerzeugungseinheit und/oder eine Wärmeverteilungseinheit umfassen. Eine Wärmeerzeugungseinheit kann beispielsweise einen Wärmetauscher, eine thermische Solaranlage, eine Ölfeuerungsanlage, einen Heizkessel, eine Gastherme, eine Wärmepumpe etc. beinhalten. Eine Wärmeverteilungseinheit kann einen Mischer, einen Stellmotor und/oder eine Pumpe beispielsweise umfassen.

Ein Raum kann beispielsweise ein Raum an sich oder ein Raumabschnitt sein. Insbesondere bei Räumen größer 15m$^2$ kann ein Raum in Raumabschnitte unterteilt sein. Entsprechend kann für einen Raumabschnitt ein Temperatursensor, der eine Ist-Temperatur bereitstellt, ein Wärmeübertrager und eine Solltemperatur vorliegen. In manchen Ausführungsformen können mehrere durch Wände räumlich getrennte Räume zu einem Raum zusammengefasst sein.

Ein Trägermedium kann ein Fluid, insbesondere ein Frostschutzmittel, ein (aufbereitetes) Heizungswasser, Grauwasser, Brauchwasser, eine Kombination davon etc. sein. Vorteilhafterweise weist das Fluid im Vergleich zu anderen Fluiden gute Wärmeaufnahme- und Wärmeabgabeeigenschaften auf. Beispiele für Wärmeübertrager sind Wärmestrahler, Konvektoren, Heizkörper, Flächenheizungen, Bodenheizungen, Wandheizungen, Niedertemperaturheizkörper etc.

Des Weiteren beinhaltet das erfindungsgemäße System eine im Vorlauf (VL) oder im Rücklauf (RL) angeordnete Pumpe zum Zirkulieren des Trägermediums, eine Regeleinrichtung (Regeleinheit) zum Regeln der Heizungseinheit, einen oder mehrere Sollwertgeber, die eine Solltemperatur $T_{n,soll}$ für einen oder mehrere zu heizende Räume zur Verfügung stellt, und mindestens einen Temperatursensor pro zu heizendem Raum zum Ermitteln einer Ist-Temperatur $T_{n,ist}$ des zu heizenden Raums.

Ein Sollwertgeber kann beispielsweise eine Mensch-Maschine-Schnittstelle (HMI), einen Drehregler, einen Schieberegler, oder eine Digitaleingabe umfassen. In manchen Ausführungsformen kann der Sollwertgeber eine Schnittstelle zur Übergabe von einer oder mehreren Solltemperaturen $T_{n,soll}$ für einen oder mehrere zu heizende Räume beinhalten. In manchen Ausführungsformen kann ein Temperatursollwert ein Steuerparameter eines Regelkreises sein.

Nicht-limitierende Beispiele für einen Temperatursensor sind ein Heißleiter (NTC), ein Kaltleiter (PTC), ein Halbleiter-Temperatursensor und ein Thermoelement. In manchen Ausführungsformen kann zur Ermittlung einer Raumtemperatur eine Temperatur des Vorlaufs (VL) mit einer Temperatur des Rücklaufs (RL) verglichen werden.

In dem erfindungsgemäßen System ist die Regeleinrichtung dazu eingerichtet, eine Heizungseinheit in Abhängigkeit einer Differenz $\Delta T_n$ zwischen einem Sollwert $T_{n,soll}$ eines zu heizenden Raums der einen oder mehreren zu heizenden Räume und der Ist-Temperaturen $T_{n,ist}$ des zu heizenden Raums zu steuern. Die Differenz $\Delta T_n$ kann beispielsweise digital oder analog ermittelt werden.

In manchen Ausführungsformen kann die Regeleinrichtung einen Mikroprozessor, eine programmierbare Logikschaltung etc. umfassen.

Dies hat den Vorteil, dass die Steuerung der Heizungseinheit mittels der Regeleinrichtung eine Übereinstimmung der Raumtemperatur $T_{n,ist}$ mit der Solltemperatur $T_{n,soll}$ schneller herbeiführt, insbesondere bei großen Unterschieden zwischen Raumtemperatur $T_{n,ist}$ und Solltemperatur $T_{n,soll}$. Als Folge kann ein Benutzervertrauen gegenüber der Regelung der Heizungseinheit verbessert werden, sodass ein Verändern der Solltemperatur $T_{n,soll}$ (manuelles Nachregeln) unterbleibt, um eine gewünschte Raumtemperatur zu erhalten.

Des Weiteren kann dadurch die Raumtemperatur, insbesondere bei Nicht-Benutzung des Raums, weiter abgesenkt werden, da die Regeleinrichtung dazu eingerichtet ist, auf größere Temperaturdifferenzen $\Delta T_n$ zwischen einem Sollwert $T_{n,soll}$ und einer Ist-Temperatur $T_{n,ist}$ besser zu reagieren und diese regeltechnisch zu berücksichtigen. Als Folge kann aufgrund der Temperaturabsenkungen Energie gespart werden und das Wohlbefinden des Benutzers hinsichtlich der Raumtemperatur verbessert werden.

In besonders angepassten und energiesparsamen Ausführungsformen der Erfindung kann die Solltemperatur $T_{n,soll}$ in Abhängigkeit der Zeit, insbesondere entsprechend einer Temperaturkurve, vorgegeben sein. Dadurch kann die Temperatur in dem oder den Räumen besonders automatisiert an die Bedürfnisse der Raumbenutzer angepasst werden.

Des Weiteren kann ein Heizen des Raums bei Nicht-Benutzung unterlassen werden und dadurch Energie gespart werden. Auf Grund der besonders wirkungsvollen Steuerung der Heizungseinheit mittels der Regeleinrichtung können Wärmeanforderungen an die Heizungseinheit (Solltemperatur $T_{n,soll}$ in Abhängigkeit der Zeit) am wirklichen Bedarf ohne Berücksichtigung von Vorlaufszeiten erstellt werden. Dadurch kann ein Bestimmen der Sollwerte $T_{n,soll}$ durch einen Benutzer vereinfacht werden.

Des Weiteren kann durch Solltemperaturen $T_{n,soll}$ in Abhängigkeit der Zeit besonders auf die Temperaturanforderungen hinsichtlich Tag-Nacht eingegangen werden.

In besonders vorteilhaften Ausführungsformen kann die Heizungseinheit eine Wärmeerzeugungseinheit und/oder eine Wärmeverteilungseinheit umfassen. Dadurch kann die Regeleinrichtung dazu eingerichtet sein, die Wärmeerzeugungseinheit und/oder die Wärmeverteilungseinheit zu steuern. Das Steuern der Wärmeerzeugungseinheit kann den Vorteil haben, dass Wärme besonders bedarfsgerecht erzeugt wird, und dadurch Ressourcen in besonderem Maße gespart werden können. Das Steuern der Wärmeverteilungseinheit kann den Vorteil haben, dass Wärme besonders bedarfsgerecht/zielgerichtet in einem Haus verteilt werden kann und dadurch ein Überhitzen von Räumen vermieden und dadurch der Energieverbrauch reduziert werden kann.

In besonders benutzerfreundlichen Ausführungsformen kann die Regeleinrichtung des Weiteren dazu eingerichtet sein, die Heizungseinheit zusätzlich in Abhängigkeit einer Außentemperatur zu steuern. Da in Abhängigkeit eines Temperaturunterschieds zwischen der Ist-Temperatur $T_{n,ist}$ eines Raumes und der Außentemperatur Wärme vom Raum nach draußen übertragen/transportiert wird, insbesondere bei einer schlechten Wärmedämmung, mittels einer (kontrollierten) Wohnraumlüftung und aufgrund von Öffnungen wie Fenster, Türen, etc. kann der Wärmebedarf im Raum in Abhängigkeit der Außentemperatur steigen.

Außerdem kann in manchen Ausführungsformen die Solltemperatur eines Raums in Abhängigkeit der Außentemperatur vorgegeben sein. Bei einer niedrigeren Außentemperatur kann das Kälteempfinden des Menschen steigen, sodass eine höhere Raumtemperatur gewünscht ist.

In besonders vorteilhaften Ausführungsformen kann die Regeleinrichtung des Weiteren dazu eingerichtet sein, die Heizungseinheit zusätzlich in Abhängigkeit der Solltemperatur $T_{n,soll}$ eines zu heizenden Raums zu steuern. Dies kann den Vorteil haben, dass das Regelziel der Solltemperatur $T_{n,soll}$ mittels der Berücksichtigung bei der Steuerung ohne Überschwingen erreicht wird.

In besonders komplexen Ausführungsformen kann die Regeleinrichtung dazu eingerichtet sein, in einem Gebäude mit mehreren zu heizenden Räumen die Heizungseinheit in Abhängigkeit einer maximalen Differenz $\Delta T_{max}$

$$\Delta T_{max} \;=\; \max_{n}(T_{n,soll} - T_{n,ist})$$

aus den ermittelten Differenzen $\Delta T_n$, insbesondere mittels der Gleichung , zu steuern, wobei $T_{n,soll}$ die Solltemperatur eines Raumes n der einen oder mehreren zu heizenden Räume ist, $T_{n,ist}$ die Ist-Temperatur des Raumes n ist und das Maximum über die mehreren zu heizenden Räume des Gebäudes ermittelt wird. Dadurch kann die Heizungseinheit besonders zielführend auf einen Wärmebedarf in Höhe des maximalen Temperaturunterschieds reagieren.

In manchen Ausführungsformen kann die Regeleinrichtung dazu eingerichtet sein, die Heizungseinheit in

$$\Delta T_{max} \;=\; \max_{n} Y(T_{n,soll} - T_{n,ist}, X_n)$$

Abhängigkeit einer maximalen Differenz zu steuern, wobei Y eine Funktion in Abhängigkeit der Eingabeparameter ist, $T_{n,soll}$ die Solltemperatur eines Raumes n der einen oder mehreren zu heizenden Räume ist und $T_{n,ist}$ die Ist-Temperatur des Raumes n ist. $X_n$ kann beispielsweise einen Wert für eine Fläche des zu heizenden Raums n, einen Wert für ein Volumen des zu heizenden Raums n, einen Wert in Abhängigkeit der Exposition des Raumes n (nach Süden, Süd-Westen exponiert, keine Exposition etc.), einen Wert in Abhängigkeit einer Wettervorhersage (wie beispielsweise Sonnenstunden in Abhängigkeit der Zeit etc.) und/oder einen Wert in Abhängigkeit von Wetterdaten (wie beispielsweise, ob es sonnig ist, d. h. die Sonne scheint) umfassen. Ob es sonnig ist, kann beispielsweise mittels einer Photovoltaikanalage oder mittels einer thermischen Solaranlage ermittelt werden.

In manchen Ausführungsformen kann $X_n$ dabei ein Vektor umfassend mehrere Werte, insbesondere die eben genannten, sein.

Das Maximum wird über die mehreren zu heizenden Räume des Gebäudes ermittelt. Dies kann den Vorteil haben, dass ein Wärmebedarf besonders präzise ermittelt werden kann. Beispielsweise kann die Differenz $\Delta T_n$ des n-ten Raums mittels des Wertes $X_n$ normiert werden. In manchen Ausführungsformen kann die Differenz $\Delta T_n$ mittels eines Wertes, der von einer Wertemenge der Variablen $X_n$ abgebildet wird, normiert werden. Dies kann den Vorteil haben, dass eine Einstellung der Regeleinrichtung besonders benutzerfreundlich erfolgen kann.

In einer besonders zuverlässigen Ausführungsform kann die Regeleinrichtung dazu eingerichtet sein, in einem Gebäude mit mehreren zu heizenden Räumen die Heizungseinheit in Abhängigkeit einer maximalen Solltemperatur

$$T_{soll,max} \;=\; \max_{n}(T_{n,soll})$$ zu steuern, wobei $T_{n,soll}$ die Solltemperatur eines Raumes n ist, und das Maximum über die mehreren zu heizenden Räume des Gebäudes ermittelt wird.

Dadurch kann sichergestellt werden, dass insbesondere bei Heizungseinheiten mit sehr unterschiedlichen Solltemperaturen der Räume und Ist-Temperaturen der Räume das Regelziel für jeden der Räume erreicht werden kann.

In manchen Ausführungsformen kann die Regeleinrichtung dazu eingerichtet sein, die Heizungseinheit in

$$\Delta T_{soll,max} \;=\; \max_{n} Z(T_{n,soll}, X_n)$$

Abhängigkeit einer maximalen Solltemperatur zu steuern, wobei Z eine Funktion in Abhängigkeit der Eingabeparameter ist und $T_{n,soll}$ die Solltemperatur eines Raumes n der einen oder mehreren zu heizenden Räume ist. $X_n$ kann beispielsweise einen Wert für eine Fläche des zu heizenden Raums n, einen Wert für ein Volumen des zu heizenden Raums n, einen Wert in Abhängigkeit der Exposition des Raumes n (nach Süden, Süd-Westen exponiert, keine Exposition, etc.), einen Wert in Abhängigkeit einer Wettervorhersage (wie beispielsweise Sonnenstunden in Abhängigkeit der Zeit, etc.) und/oder einen Wert in Abhängigkeit von Wetterdaten (wie beispielsweise, ob es sonnig ist, d. h. die Sonne scheint) umfassen. Ob es sonnig ist, kann beispielsweise mittels einer Photovoltaikanalage oder mittels einer thermischen Solaranlage ermittelt werden.

In manchen Ausführungsformen kann $X_n$ dabei ein Vektor umfassend mehrere Werte, insbesondere die eben genannten, sein.

In besonders flexiblen Ausführungsformen kann die Regeleinrichtung dazu eingerichtet sein, die Heizungseinheit zusätzlich in Abhängigkeit eines Typs des mindestens einen Wärmeübertragers zu steuern. Eine Typenunterteilung kann beispielsweise in Abhängigkeit eines Temperaturarbeitsbereichs des Wärmeübertragers erfolgen. Beispielsweise können Wärmestrahler, Konvektoren etc. auf Vorlauftemperaturen bis zu 85°C ausgelegt sein. Flächenheizungen, wie Wand- und Bodenheizungen, Niedertemperaturheizkörper etc. können beispielsweise für Vorlauftemperaturen bis zu 50°C ausgelegt sein. Entsprechend kann eine Wärmeübertragungsfähigkeit zwischen den einzelnen Typen variieren.

Insbesondere kann eine Typunterteilung hinsichtlich eines Wirkungsgrads/einer Effizienz einer Wärmeübertragung eines Wärmeübertragers erfolgen. Auch kann eine Typunterteilung hinsichtlich einer Funktionsweise, insbesondere Art und Weise, wie Konvektion, Wärmestrahlung, etc., erfolgen.

Folglich kann es vorteilhaft sein, die Vorlauftemperatur zu einem Wärmeübertrager in Abhängigkeit eines Temperaturarbeitsbereichs des Wärmeübertragers zu steuern, um ein Überhitzen eines Raums zu vermeiden bzw. eine schnelle und effiziente Regelung zu ermöglichen.

Dies kann den Vorteil haben, dass eine Wärmeübertragungsfähigkeit und/oder eine Funktionsweise einer Wärmeübertragung eines Wärmeübertragers für die Steuerung der Heizungseinheit mittels der Regeleinrichtung berücksichtigt wird.

In manchen Ausführungsformen kann zur Berücksichtigung des Typs des mindestens einen Wärmeübertragers eine Solltemperatur $T_{n,soll}$ und/oder eine Ist-Temperatur $T_{n,ist}$ angepasst werden. In manchen Ausführungsformen können zur Berücksichtigung des Typs des mindestens einen Wärmeübertragers eine oder mehrere Steuergrößen zum Steuern der Heizungseinheit mittels der Regeleinrichtung angepasst werden.

Ein erfindungsgemäßes Verfahren zum Betreiben einer Heizungseinheit in einem Gebäude mit einem oder mehreren zu heizenden Räumen umfasst die Schritte Bereitstellen einer oder mehrerer Solltemperaturen $T_{n,soll}$ für einen oder mehrere zu heizende Räume, Bereitstellen einer Ist-Temperatur $T_{n,ist}$ für den einen oder die mehreren zu heizende Räume, Ermitteln einer Differenz $\Delta T_n$ zwischen einem Sollwert $T_{n,soll}$ eines zu heizenden Raums der einen oder mehreren zu heizenden Räume und der Ist-Temperatur $T_{n,ist}$ des zu heizenden Raums und Steuern einer Heizungseinheit in Abhängigkeit der ermittelten Differenz $\Delta T_n$.

Ein Raum kann in manchen Ausführungsformen ein Raumabschnitt sein, insbesondere bei Räumen größer 15m$^2$. In manchen Ausführungsformen können durch Wände getrennte Räume zu einem Raum zusammengefasst sein. Eine Heizungseinheit kann beispielsweise eine Wärmeerzeugungseinheit umfassend einen Wärmetauscher, einen Heizungskessel, eine Wärmepumpe, eine Solartherme, eine Gastherme oder eine elektrische Heizung beinhalten. Bei einer elektrischen Heizung wird elektrische Energie in thermische Energie hauptsächlich zur Wärmeerzeugung umgewandelt. Vorteilhafterweise ist die Wärmeerzeugungseinheit zum Erhitzen/Erwärmen eines Fluids eingerichtet.

In manchen Ausführungsformen kann die Heizungseinheit eine Wärmeverteilungseinheit umfassend einen oder mehrere Mischer, Pumpen, Stellmotoren und/oder Verteilergruppen etc., die insbesondere durch die Regeleinrichtung gesteuert werden können, beinhalten.

Eine Solltemperatur $T_{n,soll}$ für einen zu heizenden Raum kann beispielsweise durch eine Steuergröße eines Regelkreises, durch eine Mensch-Maschine-Schnittstelle, durch eine externe Einheit etc. bereitgestellt werden. Eine Ist-Temperatur eines zu heizenden Raums kann beispielsweise mittels eines Temperatursensors, einer Temperaturerfassungseinheit etc. bereitgestellt werden.

In besonders vorteilhaften Ausführungsformen kann die Solltemperatur $T_{n,soll}$ in Abhängigkeit der Zeit, insbesondere entsprechend einer Temperaturkurve, vorgegeben sein.

In besonders ausgearbeiteten Ausführungsformen kann die Heizungseinheit eine Wärmeerzeugungseinheit und/oder eine Wärmeverteilungseinheit umfassen.

In besonders benutzerfreundlichen Ausführungsformen kann das Steuern der Heizungseinheit zusätzlich in Abhängigkeit einer Außentemperatur erfolgen.

In besonders zielgerichteten Ausführungsformen kann das Steuern der Heizungseinheit zusätzlich in Abhängigkeit der Solltemperatur $T_{n,soll}$ eines zu heizenden Raums erfolgen.

In besonders vorteilhaften Ausführungsformen kann das Verfahren in einem Gebäude mit mehreren zu heizenden Räumen die Schritte Ermitteln einer maximalen Differenz $\Delta T_{max}$ aus den ermittelten Differenzen $\Delta T_n$, insbesondere mittels der Gleichung

$$\Delta T_{max} = \max_n (T_{n,soll} - T_{n,ist})$$

, wobei $T_{n,soll}$ die Solltemperatur eines Raumes n der einen oder mehreren zu heizenden Räume ist, $T_{n,ist}$ die Ist-Temperatur des Raumes n ist, und das Maximum über die mehreren zu heizenden Räume des Gebäudes ermittelt wird und Steuern der Heizungseinheit in Abhängigkeit der maximalen Differenz $\Delta T_{max}$ umfassen.

In manchen Ausführungsformen kann die maximalen Differenz mittels einer Gleichung

$$\Delta T_{max} = \max_n Y(T_{n,soll} - T_{n,ist}, X_n)$$

ermittelt werden, wobei Y eine Funktion in Abhängigkeit der Eingabeparameter ist, $T_{n,soll}$ die Solltemperatur eines Raumes n der einen oder mehreren zu heizenden Räume ist und $T_{n,ist}$ die Ist-Temperatur des Raumes n ist. $X_n$ kann beispielsweise einen Wert für eine Fläche des zu heizenden Raums n, einen Wert für ein Volumen des zu heizenden Raums n, einen Wert in Abhängigkeit der Exposition des Raumes n (nach Süden, Süd-Westen exponiert, keine Exposition, etc.), einen Wert in Abhängigkeit einer Wettervorhersage (wie beispielsweise Sonnenstunden in Abhängigkeit der Zeit etc.) und/oder einen Wert in Abhängigkeit von Wetterdaten (wie beispielsweise, ob es sonnig ist, d. h. die Sonne scheint) umfassen. Ob es sonnig ist, kann beispielsweise mittels einer Photovoltaikanlage oder mittels einer thermischen Solaranlage ermittelt werden.

In manchen Ausführungsformen kann $X_n$ dabei ein Vektor umfassend mehrere Werte, insbesondere die eben genannten, sein.

Das Maximum wird über die mehreren zu heizenden Räume des Gebäudes ermittelt. Dies kann den Vorteil haben, dass ein Wärmebedarf besonders präzise ermittelt werden kann. Beispielsweise kann die Differenz $\Delta T_n$ des n-ten Raums mittels des Wertes $X_n$ normiert werden. In manchen Ausführungsformen kann die Differenz $\Delta T_n$ mittels eines Wertes, der von einer Wertemenge der Variablen $X_n$ abgebildet wird, normiert werden. Dies kann den Vorteil haben, dass eine Einstellung der Regeleinrichtung besonders benutzerfreundlich erfolgen kann.

In besonders zuverlässigen Ausführungsformen kann das Verfahren die Schritte Finden einer maximalen Solltemperatur $T_{soll,max} = \max_n(T_{n,soll})$, wobei $T_{n,soll}$ die Solltemperatur eines Raumes n ist, das Maximum über die mehreren zu heizenden Räume des Gebäudes ermittelt wird und das Steuern der Heizungseinheit zusätzlich in Abhängigkeit der maximalen Solltemperatur $T_{soll,max}$ erfolgt umfassen.

In manchen Ausführungsformen kann eine maximale Solltemperatur mittels der Gleichung $\Delta T_{soll,max} = \max_n Z(T_{n,soll}, X_n)$ ermittelt werden, wobei Z eine Funktion in Abhängigkeit der Eingabeparameter ist und $T_{n,soll}$ die Solltemperatur eines Raumes n der einen oder mehreren zu heizenden Räume ist. $X_n$ kann beispielsweise einen Wert für eine Fläche des zu heizenden Raums n, einen Wert für ein Volumen des zu heizenden Raums n, einen Wert in Abhängigkeit der Exposition des Raumes n (nach Süden, Süd-Westen exponiert, keine Exposition etc.), einen Wert in Abhängigkeit einer Wettervorhersage (wie beispielsweise Sonnenstunden in Abhängigkeit der Zeit, etc.) und/oder einen Wert in Abhängigkeit von Wetterdaten (wie beispielsweise, ob es sonnig ist, d. h. die Sonne scheint) umfassen. Ob es sonnig ist, kann beispielsweise mittels einer Photovoltaikanalage oder mittels einer thermischen Solaranlage ermittelt werden.

In manchen Ausführungsformen kann $X_n$ dabei ein Vektor umfassend mehrere Werte, insbesondere die eben genannten, sein.

In besonders anpassungsfähigen Ausführungsformen kann das Steuern der Heizungseinheit zusätzlich in Abhängigkeit eines Typs mindestens eines Wärmeübertragers der Heizungseinheit erfolgen.

**Figurenbeschreibung**

Fig. 1 zeigt schematisch ein System zum Betreiben einer Heizungseinheit gemäß einer Ausführungsform der Erfindung.

Fig. 2 zeigt schematisch ein System zum Betreiben einer Heizungseinheit gemäß einer Ausführungsform der Erfindung.

Fig. 3a zeigt schematisch ein Beispiel für einen Hydraulikplan eines Heizkreislaufs einer Heizungseinheit 111 gemäß einer Ausführungsform der Erfindung.

Fig. 3b zeigt schematisch ein Beispiel für einen Hydraulikplan einer Heizungseinheit 111 gemäß einer Ausführungsform der Erfindung.

Fig. 4 zeigt schematisch einen Prozessflussplan eines Verfahrens zum Betreiben einer Heizungseinheit gemäß einer Ausführungsform der Erfindung.

Fig. 5 zeigt einen Prozessflussplan eines Verfahrens zum Betreiben einer Heizungseinheit gemäß einer Ausführungsform der Erfindung.

Fig. 6 zeigt einen Prozessflussplan eines Verfahrens zum Betreiben einer Heizungseinheit gemäß einer Ausführungsform der Erfindung.

Fig. 7 zeigt einen Prozessflussplan eines Verfahrens zum Betreiben einer Heizungseinheit gemäß einer Ausführungsform der Erfindung.

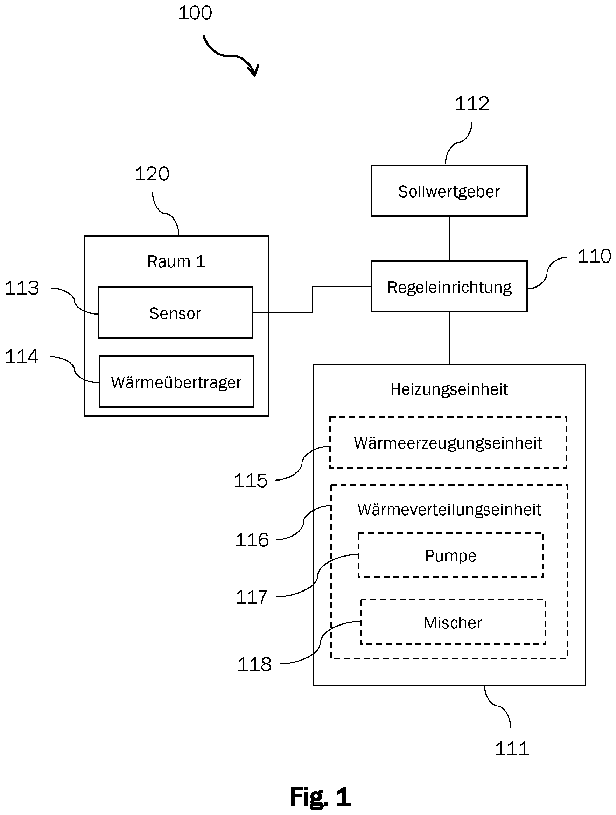

Fig. 1 zeigt schematisch ein System zum Betreiben einer Heizungseinheit gemäß einer Ausführungsform der Erfindung. Das System 100 umfasst einen Temperatursensor 113 und einen Wärmeübertrager 114, die wie in Figur 1 gezeigt in einem Raum 120 angeordnet sein können. Ein Wärmeübertrager kann beispielsweise ein Radiator, eine Flächenheizung, etc. oder eine Kombination davon sein.

Der Sensor 113 ist mit einer Regeleinrichtung 110 des Systems 100 verbunden. Die Regeleinrichtung 110 ist zusätzlich mit einem Sollwertgeber 112 zum Bereitstellen eines oder mehrerer Temperatursollwerte $T_{n,soll}$ verbunden. In manchen Ausführungsformen kann der Sollwertgeber 112 eine Mensch-Maschine-Schnittstelle umfassen, wie beispielsweise einen Schieberegler, Drehregler und/oder ein Touch-Display, etc.

In manchen Ausführungsformen kann der Sollwertgeber 112 eine analoge oder digitale Schnittstelle zum Empfangen von analogen bzw. digitalen Temperatursollwerten umfassen.

Die Regeleinrichtung 110 kann beispielsweise eine Recheneinheit (CPU), eine Speichereinheit und/oder eine programmierbare Logik umfassen. Die Regeleinrichtung 110 ist zum Steuern einer Heizungseinheit 111 eingerichtet. Die Heizungseinheit 111 kann eine Wärmeerzeugungseinheit 115 und/oder eine Wärmeverteilungseinheit 116 umfassen. Die Wärmeerzeugungseinheit kann beispielsweise dazu eingerichtet sein, in Abhängigkeit einer Steuerung der Regeleinrichtung Wärme an die Wärmeverteilungseinheit 116 zu liefern bzw. Wärme für die Wärmeverteilungseinheit 116 zu erzeugen.

Die Wärmeverteilungseinheit 116 kann dazu eingerichtet sein, insbesondere in Abhängigkeit einer Steuerung der Regeleinrichtung 110, Wärme, beispielsweise mittels einer Pumpe 117, eines Stellmotors und/oder eines Mischers 118 eine von der Wärmeerzeugungseinheit 115 bereitgestellte Wärme zum Wärmeübertrager 114 zu transportieren. Der Wärmetransport kann beispielsweise durch das Zirkulieren eines Trägermediums, wie eines Fluids, in einer Rohreinheit erfolgen. Eine Rohreinheit kann beispielsweise eines oder mehrere miteinander verbundene Rohre umfassen, sodass das Trägermedium/Fluid insbesondere mithilfe einer Pumpe transportiert werden bzw. zirkulieren kann. Wie mit den gestrichelten Linien angedeutet, stellen die Einheiten 115, 116, 117, 118 optionale Einheiten in dem System 100 dar.

Die Regeleinrichtung 110, wie in Fig. 1 gezeigt, ist dazu eingerichtet, insbesondere mittels einer Differenz-bildungseinheit, eine Differenz $\Delta T_n$ zwischen einem vom Sollwertgeber 112 bereitgestellten Temperatursollwert $T_{n,soll}$ und einer vom Temperatursensor 113 bereitgestellten Ist-Temperatur $T_{n,ist}$ zu bilden. Die Regeleinrichtung 110 ist des Weiteren dazu eingerichtet, in Abhängigkeit der ermittelten Differenz $\Delta T_n$ die Heizungseinheit 111, insbesondere die Wärmeerzeugungseinheit 115 und/oder die Wärmeverteilungseinheit 116, zu steuern.

In manchen Ausführungsformen kann die Regeleinrichtung zum Ermitteln einer maximalen Differenz $\Delta T_{max}$ unter einer Vielzahl an Differenzen $\Delta T_n$ zwischen Temperatursollwert $T_{n,soll}$ und Ist-Temperaturen $T_{n,ist}$ eingerichtet sein. Die Regeleinrichtung kann entsprechend dazu eingerichtet sein, die Heizungseinheit in Abhängigkeit der maximalen Differenz $\Delta T_{max}$ zu steuern.

In manchen Ausführungsformen kann die Regeleinrichtung dazu eingerichtet sein, die Heizungseinheit zusätzlich in Abhängigkeit einer Außentemperatur zu steuern.

In besonders effizienten Ausführungsformen kann die Regeleinrichtung dazu eingerichtet sein, die Heizungseinheit zusätzlich in Abhängigkeit der Solltemperatur $T_{n,soll}$ zu steuern. Bei mehreren Solltemperaturen kann die Regeleinrichtung dazu eingerichtet sein, die Heizungseinheit zusätzlich in Abhängigkeit einer maximalen Solltemperatur $T_{soll,max}$ der Solltemperaturen $T_{n,soll}$ zu steuern, wobei das Maximum über die Räume n ermittelt wird.

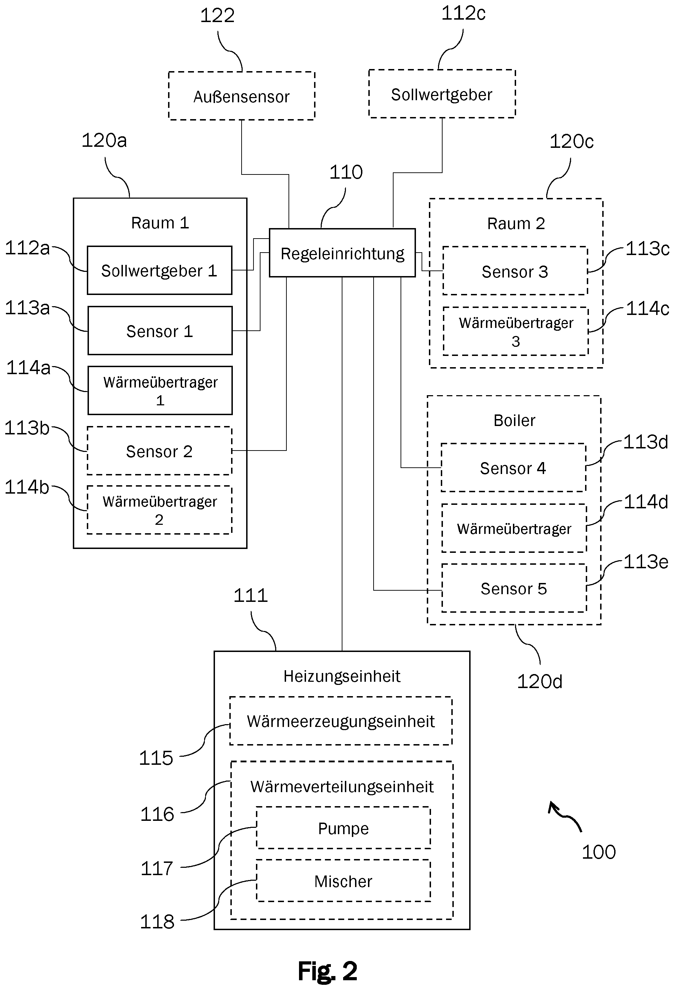

Fig. 2 zeigt schematisch ein System zum Betreiben einer Heizungseinheit gemäß einer Ausführungsform der Erfindung. In Fig. 2 ist analog zu Fig. 1 eine Heizungseinheit 111, die optional eine Wärmeerzeugungseinheit 115 und/oder eine Wärmeverteilungseinheit 116 umfassen kann, gezeigt. Das in Fig. 2 gezeigte System kann eine Erweiterung des in Fig. 1 gezeigten Systems darstellen.

Die Heizungseinheit 111 wird mittels der Regeleinrichtung 110 gesteuert. Ein Sollwertgeber 112a zum Bereitstellen eines Temperatursollwerts $T_{1,soll}$ und ein Temperatursensor 113a zum Bereitstellen einer Ist-Temperatur $T_{1,ist}$ kann beispielsweise in einem Raum 120a angeordnet sein. In dem Raum 120a ist ein Wärmeübertrager 114a vorhanden.

In manchen Ausführungsformen kann ein weiterer Temperatursensor 113b und ein weiterer Wärmeübertrager 114b in dem Raum 120a angeordnet sein. Mittels des Temperatursensors 113b und des Wärmeübertragers 114b kann der Raum 120a in zwei Abschnitte aufgeteilt werden (Raumbereiche). Der Sollwertgeber 112a kann dazu eingerichtet sein, mehrere Temperatursollwerte $T_{n,soll}$ bereitzustellen, sodass verschiedene Raumbereiche in einem Raum 120a auf unterschiedliche Temperatursollwerte geregelt werden, was zu unterschiedlichen Ist-Temperaturen $T_{n,ist}$ der Raumbereiche führen kann.

In dem in Fig. 2 gezeigten Ausführungsbeispiel ist optional ein dritter Temperatursensor 113c zum Bereitstellen einer Ist-Temperatur $T_{3,ist}$ und ein Wärmeübertrager 114c in einem Raum 120c angeordnet. Ein Sollwertgeber 112c stellt einen Temperatursollwert $T_{3,soll}$ für den Raum 120c zur Verfügung.

Ebenfalls optional können Temperatursensoren 113d und 113e an einem Boiler 120d angeordnet sein. Der Boiler kann beispielsweise einen Wärmeübertrager 114d umfassen, wobei durch den Wärmeübertrager 114d beispielsweise Brauchwasser erwärmt/erhitzt werden kann. Der Wärmeübertrager 114d kann dazu insbesondere Rohrbündel und/oder Heiztaschen umfassen. In manchen Ausführungsformen kann der Sollwertgeber 112c dazu eingerichtet sein, einen Temperatursollwert $T_{4,soll}$ und/oder einen Temperatursollwert $T_{5,soll}$ für den Boiler 12d bereitzustellen.

In manchen Ausführungsformen kann die Regeleinrichtung 110 mit einem Außensensor (Temperatursensor) 122 verbunden sein. Die Sollwertgeber 112a, 112c sind jeweils mit der Regeleinrichtung 110 verbunden. Ebenso sind die Temperatursensoren 113a bis 113e mit der Regeleinrichtung 110 verbunden. Die Verbindungen in Figur 2 sind zur Signalübertragung, beispielsweise leitungsgebunden und/oder drahtlos, eingerichtet.

Die Regeleinrichtung 110 ist dazu eingerichtet, eine Differenz $\Delta T_n$, beispielsweise mittels einer Differenz-ermittlungseinheit, zwischen den von den Sollwertgebern 112a, 112c bereitgestellten Temperatursollwerten $T_{1,soll}$, $T_{2,soll}$, $T_{3,soll}$, $T_{4,soll}$, $T_{5,soll}$ und den zugehörigen von den Temperatursensoren 113a, 113b, 113c, 113d, 113e bereitgestellten Ist-Temperaturen $T_{1,ist}$, $T_{2,ist}$, $T_{3,ist}$, $T_{4,ist}$, $T_{5,ist}$ zu ermitteln. Die Regeleinrichtung 110 ist dazu eingerichtet, in Abhängigkeit der ermittelten Differenzen $\Delta T_n$, beispielsweise mittels einer Steuereinheit, die Heizungseinheit 111 zu steuern.

In manchen Ausführungsformen kann die Heizungseinheit mehrere Wärmeverteilungseinheiten 116, insbesondere miteinander verkoppelte und verschachtelte Wärmeverteilungseinheiten, die von der Regeleinrichtung 110 gesteuert werden, umfassen.

In manchen Ausführungsformen kann die Regeleinrichtung zusätzlich dazu eingerichtet sein, in Abhängigkeit einer Außentemperatur, die vom Außensensor 122 ermittelt wird, die Heizungseinheit 111 zu steuern. In manchen Ausführungsformen kann die Regeleinrichtung dazu eingerichtet sein, die Heizungseinheit 111 zusätzlich in Abhängigkeit der Temperatursollwerte, die von den Sollwertgebern 112a, 112c bereitgestellt werden, insbesondere mittels einer Steuereinrichtung, zu steuern. In manchen Ausführungsformen kann das Steuern das Ausgeben eines digitalen Signals umfassen. In manchen Ausführungsformen kann das Steuern das Ausgeben eines analogen Steuersignals und/oder das Versorgen einer Einheit, einer Pumpe, eines Mischers etc. mit einer Versorgungsspannung/einem Versorgungsstrom umfassen.

Die in Fig. 1 und 2 gezeigten Verbindungen zeigen Verbindungen zur Energie- und/oder Signalübertragung. Die Verbindungen können beispielsweise über Funk und/oder leitungsgebunden ausgestaltet/realisiert sein.

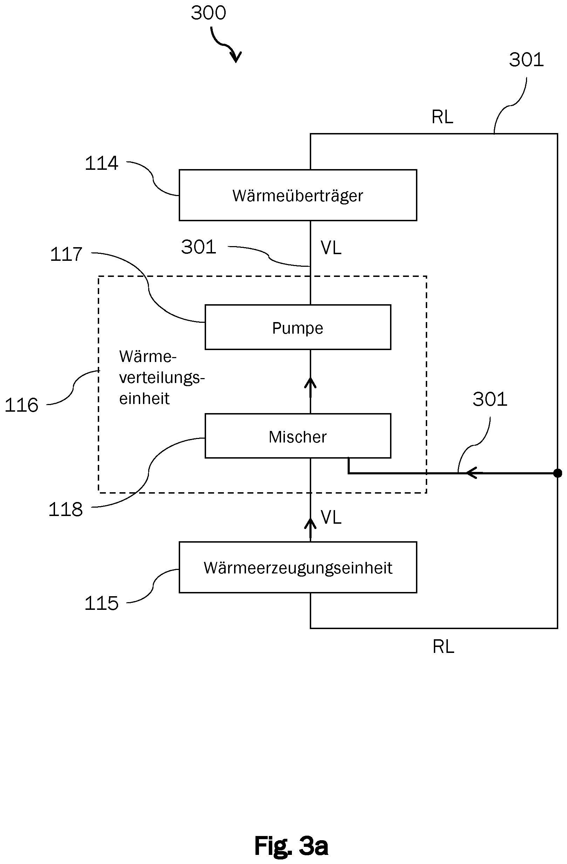

Fig. 3a zeigt schematisch ein Beispiel für einen Hydraulikplan eines Heizkreislaufs einer Heizungseinheit 111 gemäß einer Ausführungsform der Erfindung, insbesondere mit Bezug auf die in Fig. 1 und 2 gezeigten Systeme 100.

Der Hydraulikplan ist rein beispielhafter Natur und in keiner Weise einschränkend. Der Heizungseinheit können Einheiten hinzugefügt, weggelassen, vertauscht, zusammengefasst und getrennt werden, ohne die Erfindung zu beeinflussen.

Der Heizkreislauf 300 umfasst eine Wärmeerzeugungseinheit 115, eine Wärmeverteilungseinheit 116 umfassend eine Pumpe 117 und einen Mischer 118. Des Weiteren umfasst der Heizkreislauf 300 einen Wärmeübertrager 114. Von der Wärmeerzeugungseinheit 115 wird ein Trägermedium (wärmetransportierendes Fluid) erwärmt/erhitzt. Beispiele für ein Trägermedium/Fluid sind Frostschutzmittel, (aufbereitetes) Heizungswasser, Brauchwasser, Grauwasser etc.

Ein Vorlauf (VL) der Wärmeerzeugungseinheit 115 und ein Rücklauf (RL) der Wärmeerzeugungseinheit 115 sind jeweils mit einem Mischereingang des Mischers 118 verbunden. Der Mischer 118 ist über die Pumpe 117 mit dem Wärmeübertrager 114 verbunden. Der Abschnitt, in dem das Trägermedium/Fluid von der Wärmeerzeugungseinheit 115 zum Wärmeübertrager hin transportiert wird, wird als Vorlauf (VL) bezeichnet. Der Abschnitt, in dem das Fluid vom Wärmeübertrager 114 zur Wärmeerzeugungseinheit transportiert wird, wird als Rücklauf (RL) bezeichnet. In manchen Ausführungsformen kann die Pumpe 117 anstatt im Vorlauf (VL) im Rücklauf (RL) angeordnet sein. Die Einheiten können beispielsweise mittels Rohren und/oder Schläuchen 301 verbunden sein.

Die Pumpe 117 ist dazu eingerichtet, das von der Wärmeerzeugungseinheit 115 erhitzte Fluid in den Rohren/-Verbindungen 301 zu zirkulieren, sodass Wärme von der Wärmeerzeugungseinheit 115 zum Wärmeübertrager 114 im Vorlauf (VL) transportiert wird. Mittels der Wärmeverteilungseinheit 116, insbesondere mittels der Pumpe 117 und/oder dem Mischer 118, kann die von der Wärmeerzeugungseinheit 115 zum Wärmeübertrager 114 transportierte Wärmemenge reguliert werden. Durch den Mischer kann das Trägermedium/Fluid vom Vorlauf der Wärmeerzeugungseinheit mit dem Trägermedium/Fluid vom Rücklauf der Wärmeerzeugungseinheit gemischt werden, sodass ein zum Wärmeübertrager transportiertes Trägermedium/Fluid eine vorgegebene Temperatur aufweist. Die Temperatur des zum Wärmeübertrager transportierten Fluids kann dabei zwischen der Temperatur des Rücklaufs (RL) und der Temperatur des Vorlaufs der Wärmeerzeugungseinheit liegen.

In manchen Ausführungsformen kann die Wärmeerzeugungseinheit 115 mit mehreren Heizkreisläufen 300 verbunden sein. In manchen Ausführungsformen können mehrere Wärmeübertrager 114 mittels eines Heizkreisverteilers (nicht in Fig. 3a gezeigt) in einem Heizkreis 300 angeordnet sein. In manchen Ausführungsformen kann ein Heizkreisverteiler Stellmotoren umfassen. Ein Stellmotor kann wiederum Teil der Wärmeverteilungseinheit sein und dazu eingerichtet sein, einen Durchfluss und damit eine transportierte Wärmemenge zu regulieren.

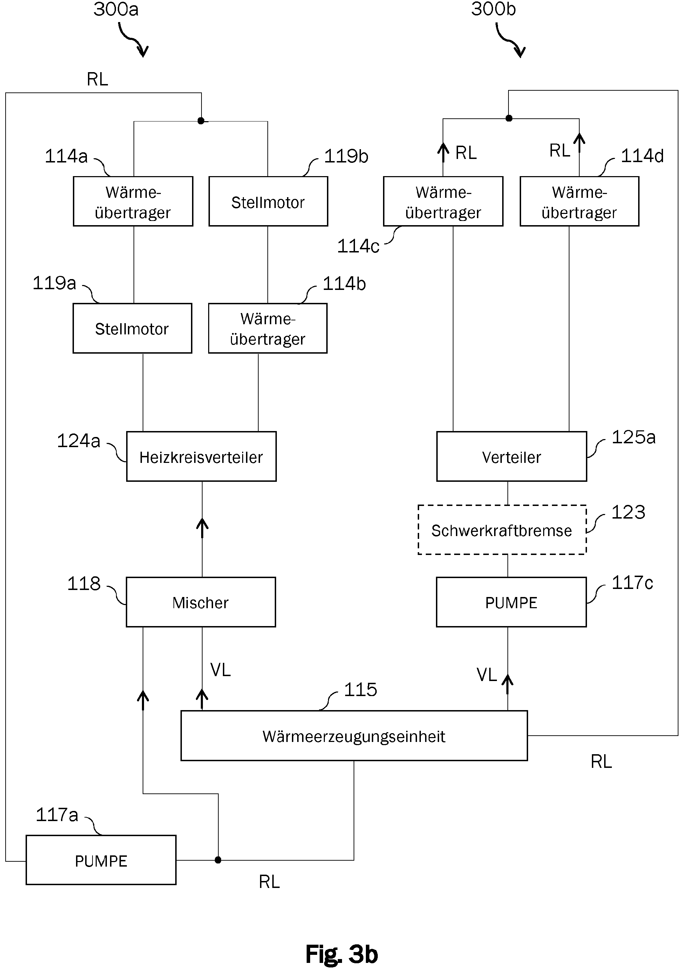

Fig. 3b zeigt schematisch ein Beispiel für einen Hydraulikplan einer Heizungseinheit 111 gemäß einer Ausführungsform der Erfindung, insbesondere mit Bezug auf die in Fig. 1 und 2 gezeigten Systeme 100. Der in Fig. 3b gezeigte Hydraulikplan zeigt zwei Heizkreisläufe 300a und 300b. Der Hydraulikplan ist rein beispielhafter Natur. Die Heizkreisläufe 300a und 300b in Fig. 3b basieren im Kern auf dem in Fig. 3a gezeigten Heizkreislauf 300.

Im Heizkreislauf 300a ist die Wärmeerzeugungseinheit 115 im Vorlauf mit einem Mischer 118 verbunden. Der Mischer ist zusätzlich mit dem Rücklauf (RL) der Wärmeerzeugungseinheit 115 verbunden. In dieser Ausführungsform ist eine Pumpe 117a im Rücklauf zwischen Wärmeübertrager 119a, 119b und der Wärmeerzeugungseinheit 115 angeordnet. Der Mischer 118 ist mit einem Heizkreisverteiler 124a verbunden. In manchen Ausführungsformen kann ein Stellmotor zwischen dem Heizkreisverteiler 124a und einem Wärmeübertrager 114a angeordnet sein. In manchen Ausführungsformen kann ein Stellmotor 119b einem Wärmeübertrager 119b nachgeschaltet im Rücklauf angeordnet sein und der Wärmeübertrager 114b mit dem Heizkreisverteiler 124a verbunden sein.

Ein Stellmotor kann dazu eingerichtet sein, die Durchflussmenge eines Fluids/Trägermediums zu beschränken, sodass eine zum Wärmeübertrager zugeführte Wärmemenge reguliert werden kann. Vorzugsweise kann der Stellmotor durch als Teil der Heizungseinheit durch eine Regeleinrichtung 110, wie beispielsweise in den Figurenbeschreibungen der Figs. 1 und 2 beschrieben, gesteuert werden.

Vorteilhafterweise kann der Rücklauf von mehreren Wärmeübertragern 119a, 119b zu einem Rücklauf zusammengefasst werden. Die in der Fig. 3b gezeigten Verbindungen sind Verbindungen, beispielsweise in Form von Rohren, Schläuchen etc., zum Transportieren eines Fluids/Trägermediums, wie beispielsweise (aufbereitetes) Heizungswasser, Wasser, Brauchwasser, Frostschutzmittel, eine Kombination davon etc.

Der Vorlauf (VL) der Wärmeerzeugungseinheit 115 ist des Weiteren mit einer Pumpe 117c des Heizkreislaufs 300b verbunden. Der Pumpe nachgeschaltet kann in manchen Ausführungsformen eine Schwerkraftbremse bzw. eine Rückschlagklappe/ein Rückschlagventil 123 angeordnet sein, sodass ein unerwünschtes Zirkulieren eines Fluids im Heizkreis 300b vermieden werden kann.

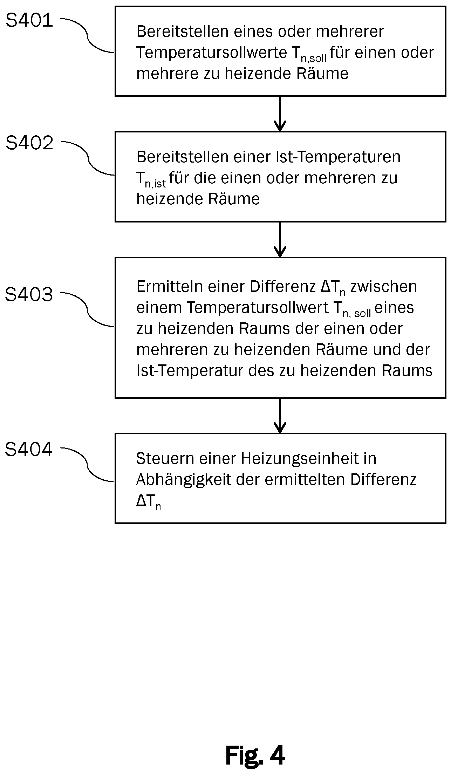

Der Pumpe 117c bzw. der Schwerkraftbremse 123 nachgeschaltet ist in dieser Ausführungsform ein Verteiler 125a angeordnet, der in Abhängigkeit eines Steuersignals einer Regeleinrichtung einen Wärmetransport von der Wärmeerzeugungseinheit 115 zum Wärmeübertrager 114c und/oder zum Wärmeübertrager 114d steuert. Die Wärmeübertrager 114c, 114d sind im Rücklauf mit der Wärmeerzeugungseinheit 115 verbunden. Die in Figs. 3a und 3b gezeigten Heizungseinheiten können beispielsweise mit den in Fig. 1 und Fig. 2 gezeigten Systemen, insbesondere durch die Regeleinrichtung 110, bzw. mittels der in den Figs. 4 bis 7 gezeigten Verfahren gesteuert werden.

Fig. 4 zeigt schematisch einen Prozessflussplan eines Verfahrens zum Betreiben einer Heizungseinheit gemäß einer Ausführungsform der Erfindung.

In einem ersten Schritt S401 werden ein oder mehrere Temperatursollwerte $T_{n,soll}$ für einen oder mehrere zu heizende Räume bereitgestellt. In einem Schritt S402 werden Ist-Temperaturen $T_{n,ist}$ für die einen oder mehreren zu heizende Räume bereitgestellt. Im Schritt S403 wird eine Differenz $\Delta T_n$ zwischen einem Temperatursollwert $T_{n,soll}$ eines zu heizenden Raums der einen oder der mehreren zu heizenden Räume und der Ist-Temperatur des zu heizenden Raums ermittelt. In Abhängigkeit der ermittelten Differenz $\Delta T_n$ wird im Schritt S404 eine Heizungseinheit gesteuert.

Ein Raum in diesem Zusammenhang kann auch ein Raumabschnitt sein. In manchen Ausführungsformen können mehrere Räume zu einem Raum im Sinne des Verfahrens zusammengefasst sein. Eine Heizungseinheit kann beispielsweise eine Wärmeerzeugungseinheit wie einen Wärmetauscher, einen Heizkessel, einen Ölbrenner, eine Gastherme, eine Wärmepumpe etc. umfassen. Temperatursollwerte können beispielsweise mittels Mensch-Maschine-Schnittstellen, Schnittstellen zu externen Regelkreisen etc. bereitgestellt werden. Ist-Temperaturen können beispielsweise mittels Temperatursensoren, Temperaturermittlungseinheiten etc. bereitgestellt werden.

Das Verfahren hat den Vorteil, dass durch das Steuern die Heizungseinheit in Abhängigkeit der Temperaturdifferenz zwischen Temperatursollwert und Temperaturistwert die Heizungseinheit, insbesondere eine Wärmeerzeugungseinheit und/oder eine Wärmeverteilungseinheit, hinsichtlich einer Wärmemenge gesteuert werden kann.

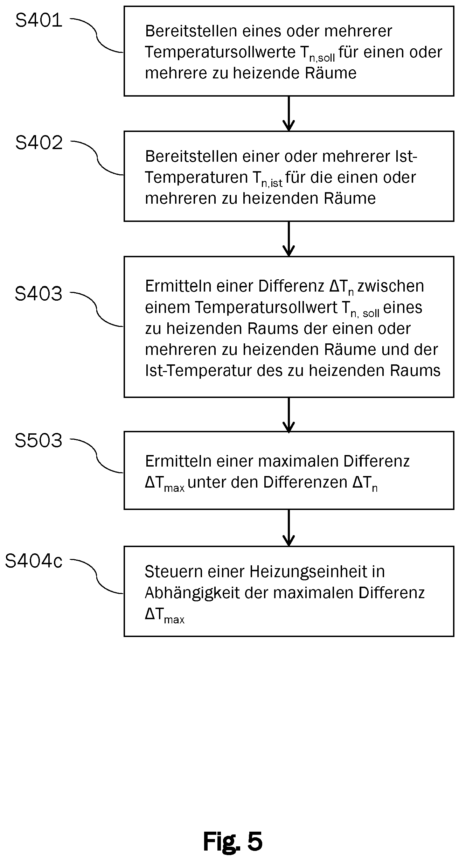

Fig. 5 zeigt einen Prozessflussplan eines Verfahrens zum Betreiben einer Heizungseinheit gemäß einer Ausführungsform der Erfindung. Das in Fig. 5 gezeigte Verfahren ist an das in Fig. 4 gezeigte Verfahren angelehnt und unterscheidet sich von dem in Fig. 4 gezeigten Verfahren dahingehend, dass nach dem Schritt S403 ein Schritt S503 Ermitteln einer maximalen Differenz $$\Delta T_{max} = \max_{n}(T_{n,soll} - T_{n,ist})$$ folgt. $T_{n,soll}$ ist die Solltemperatur eines Raumes n der einen oder mehreren zu heizenden Räume und $T_{n,ist}$ ist die Ist-Temperatur des Raumes n. Das Maximum wird über die mehreren zu heizenden Räume des Gebäudes ermittelt.

Entsprechend kann Schritt S404 zu Schritt S404c, dem Steuern einer Heizungseinheit in Abhängigkeit der maximalen Differenz $\Delta T_{max}$, geändert werden.

Dieses Verfahren hat den Vorteil, dass durch das Steuern der Heizungseinheit in Abhängigkeit der maximalen Differenz $\Delta T_{max}$ das Erwärmen eines Raumes besonders zeitnah erfolgen kann.

In manchen Ausführungsformen kann $\Delta T_{max}$ zusätzlich in Abhängigkeit der Raumgröße eines n-ten Raums ermittelt werden, sodass die maximale Differenz $\Delta T_{max}$ sich aus $$\Delta T_{max} = \max_{n}(Y(T_{n,soll} - T_{n,ist}, X_n))$$ ergibt. Y(a,b) ist eine Funktion in Abhängigkeit der Funktionsparameter. $X_n$ kann beispielsweise die Fläche oder das Volumen des n-ten Raums wiedergeben. In manchen Ausführungsformen kann $X_n$ einen Kennwert/Referenzwert in Abhängigkeit der Fläche bzw. des Volumens des n-ten Raums wiederspiegeln.

In manchen Ausführungsformen kann $X_n$ beispielsweise mittels künstlicher Intelligenz bzw. mittels Analyse des Temperaturverlaufs des n-ten Raums über die Zeit während der n-te Raum geheizt wird ermittelt werden. In manchen Ausführungsformen kann $X_n$ ein Vektor sein und mehrere Werte umfassen.

Dies hat insbesondere bei Räumen mit besonders großen Abweichungen in den Raumgrößen von Raum zu Raum den Vorteil, dass ein Überhitzen bzw. eine Überproduktion der Wärmemenge, insbesondere auf Grund einer Totzeit eines Regelsystems, vermieden werden kann.

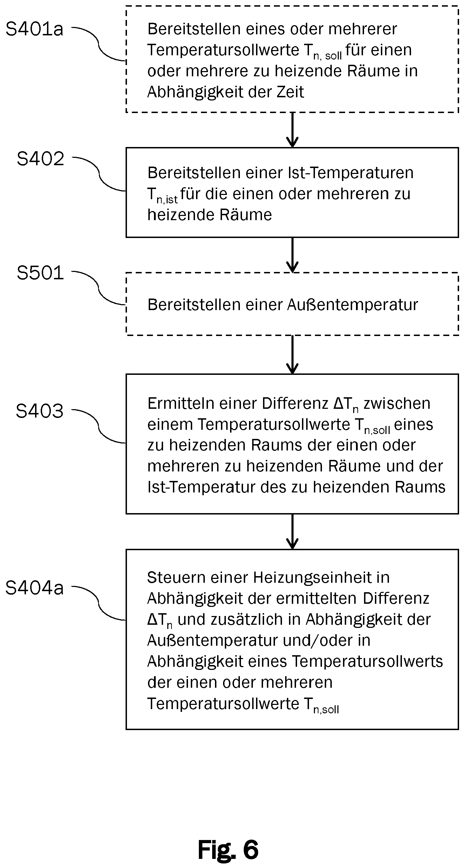

Fig. 6 zeigt einen Prozessflussplan eines Verfahrens zum Betreiben einer Heizungseinheit gemäß einer Ausführungsform der Erfindung. Das in Fig. 6 gezeigte Verfahren unterscheidet sich von dem in Fig. 4 gezeigten Verfahren dahingehend, dass der Schritt S401 optional zu Schritt S401a, dem Bereitstellen einer oder mehrerer Temperatursollwerte $T_{n,soll}$ für einen oder mehrere zu heizende Räume in Abhängigkeit der Zeit, geändert werden kann.

Zusätzlich kann das Verfahren den optionalen Schritt S501 Bereitstellen einer Außentemperatur umfassen. Der Schritt S501 kann beispielsweise nach dem Schritt S402 eingefügt werden.

Entsprechend den optionalen Änderungen kann der Schritt S404 zum Schritt S404a geändert werden. In Schritt S404a wird eine Heizungseinheit in Abhängigkeit der ermittelten Differenz $\Delta T_n$ und zusätzlich in Abhängigkeit der Außentemperatur und/oder in Abhängigkeit eines Temperatursollwerts der einen oder mehreren Temperatursollwerte $T_{n,soll}$ gesteuert.

Die Außentemperatur kann beispielsweise mittels eines Temperatursensors bereitgestellt werden. Durch das Bereitstellen der Außentemperatur kann der Regelkreis detaillierter beschrieben werden, sodass durch entsprechende Berücksichtigung in der Regelung das Regelziel (die Temperatursollwerte) effizienter und schneller erreicht werden können.

Durch das Bereitstellen der Temperatursollwerte $T_{n,soll}$ in Abhängigkeit der Zeit können Raumtemperaturen besonders automatisiert entsprechend der Raumbenutzung geregelt werden. In Kombination mit der besonders schnell ansprechenden Raumtemperaturregelung kann dadurch das Vertrauen der Raumnutzer in die Raumtemperaturregelung verbessert werden, sodass Temperaturabsenkungen in Räumen größere Akzeptanz finden können und dadurch Energie gespart werden kann.

Insbesondere kann bei einem erfindungsgemäßen Verfahren die Temperatur weiter abgesenkt werden, da das Verfahren ein schnelleres und effizienteres Ansprechverhalten des Regelkreises aufweist. Folglich kann eine Übereinstimmung von Temperatursollwert und Ist-Temperatur eines Raums schneller erreicht werden.

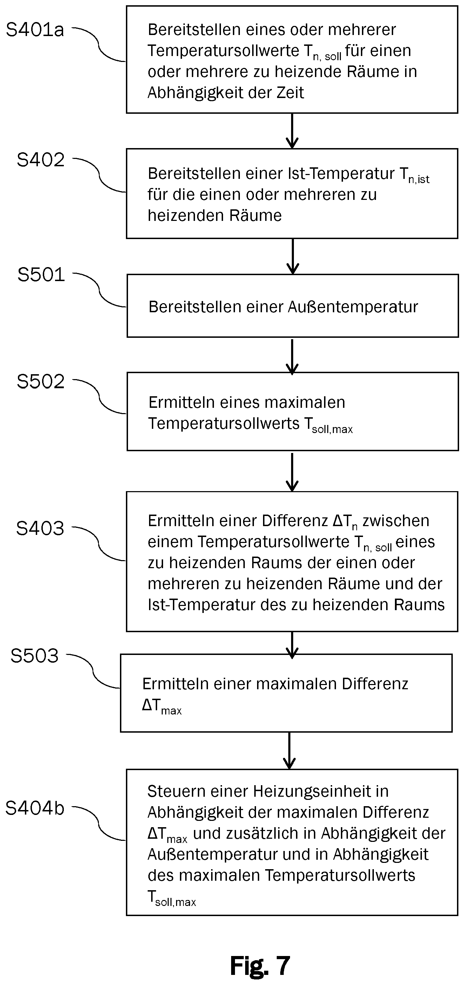

Fig. 7 zeigt einen Prozessflussplan eines Verfahrens zum Betreiben einer Heizungseinheit gemäß einer Ausführungsform der Erfindung. Fig. 7 zeigt eine Vermischung der in den Fig. 4 bis 6 gezeigten Verfahren. In einem ersten Schritt S401a werden ein oder mehrere Temperatursollwerte $T_{n,soll}$ für einen oder mehrere zu heizende Räume in Abhängigkeit der Zeit bereitgestellt. In einem nächsten Schritt S402 werden eine oder mehrere Ist-Temperaturen $T_{n,ist}$ für die einen oder mehreren zu heizenden Räume bereitgestellt. In einem nächsten Schritt S501 wird eine Außentemperatur zur Verfügung gestellt.

Im Schritt S502 wird ein maximaler Temperatursollwert $T_{soll,max}$ unter den bereitgestellten Temperatursollwerten $T_{n,soll}$ ermittelt. Im Schritt S403 wird eine Differenz $\Delta T_n$ zwischen einem Temperatursollwert $T_{n,soll}$ und der Ist-Temperatur $T_{n,ist}$ eines Raumes ermittelt. In einem Schritt S503 wird eine maximale Differenz $\Delta T_{max}$ unter den Differenzen $\Delta T_n$ ermittelt.

Im Schritt S404b wird schließlich die Heizungseinheit in Abhängigkeit der maximalen Differenz $\Delta T_{max}$ und zusätzlich in Abhängigkeit der Außentemperatur und in Abhängigkeit des maximalen Temperatursollwerts $T_{soll,max}$ gesteuert.

Dieses Verfahren ermöglicht eine optimale Nutzung der Sensorgrößen zur Steuerung einer oder mehrerer Raumtemperaturen.

In manchen Ausführungsformen können Schritte in den in den Figs. 4, 5, 6, 7 gezeigten Verfahren vertauscht, modifiziert, parallel ausgeführt sowie in ihrer Reihenfolge verändert werden, ohne dass der Kern der Erfindung verloren geht. In manchen Ausführungsformen können Schritte geteilt oder zusammengefasst werden.

In manchen Ausführungsformen können die in den Figuren 4 bis 7 gezeigten Verfahrensmerkmale kombiniert werden, selbst wenn eine solche Kombination nicht in den Figuren 4 bis 7 gezeigt ist, ohne den Kern der Erfindung zu beeinflussen. Die Figuren 4 bis 7 sind rein beispielhafter Natur und sollen in keiner Weise die Erfindung einschränken.

In manchen Ausführungsformen können die in den Fig. 4 bis 7 gezeigten Verfahren miteinander verschachtelt sein, insbesondere mit Bezug auf verschiedene Einheiten und Elemente der Heizungseinheit (Wärmeerzeugungseinheit, Wärmeverteilungseinheit, Pumpe, Mischer, Stellmotor etc.).

Die in den Figuren 4 bis 7 gezeigten Verfahren können insbesondere mittels der in den Figuren 1 und 2 gezeigten Systeme ausgeführt werden. Insbesondere die in den Figuren 1 und 2 gezeigte Regeleinrichtung 110 ist zum Steuern der Heizungseinheit 111 eingerichtet.

**Patentansprüche**

1. System (100) zum Betreiben einer Heizungseinheit (111) in einem Gebäude mit mehreren zu heizenden Räumen umfassend:

mindestens einen Wärmeübertrager (114) pro zu heizendem Raum (120),
eine Heizungseinheit (111) mit mindestens einer Wärmeerzeugungseinheit (115) zum Erhitzen eines Trägermediums, das über einen Vorlauf (VL) zu dem mindestens einen Wärmeübertrager (114) und über einen Rücklauf (RL) zur Wärmeerzeugungseinheit (115) fließt, und einer Wärmeverteilungseinheit (116),
eine im Vorlauf (VL) oder im Rücklauf (RL) angeordnete Pumpe (117) zum Zirkulieren des Trägermediums,
eine Regeleinrichtung (110) zum Regeln der Heizungseinheit (111),
mehrere Sollwertgeber (112), die jeweils eine Solltemperatur $T_{n,soll}$ für die mehreren zu heizende Räume zur Verfügung stellen,
mindestens einen Temperatursensor (113) pro zu heizenden Raum (120) zum Ermitteln einer Ist-Temperatur $T_{n,ist}$ des zu heizenden Raums (120),
**dadurch gekennzeichnet, dass**
die Regeleinrichtung (110) dazu eingerichtet ist, die Heizungseinheit (111) in Abhängigkeit einer maximalen Differenz

$$\Delta T_{max} = \max_{n} Y(T_{n,soll} - T_{n,ist}, X_n)$$

und zusätzlich in Abhängigkeit der Solltemperatur $T_{n,soll}$ des einen zu heizenden Raums (120) oder der mehreren zu heizenden Räume zu steuern, wobei:
Y eine Funktion in Abhängigkeit von

der Solltemperatur $T_{n,soll}$ eines Raums (120) n der mehreren zu heizenden Räume ist,
der Ist-Temperatur $T_{n,ist}$ des Raums (120) n ist, und
einem Paramter $X_n$, der einen Wert der Fläche des zu heizenden Raums (120) n, einen Wert für ein Volumen des zu heizenden Raums (120) n, einen Wert in Abhängigkeit der Exposition des Raums (120) n, einen Wert in Abhängigkeit einer Wettervorhersage und/oder einen Wert in Abhängigkeit von Wetterdaten umfasst, und

das Maximum über die mehreren zu heizenden Räume des Gebäudes ermittelt wird.

2. System (100) nach Anspruch 1, wobei
die Solltemperatur $T_{n,soll}$ in Abhängigkeit der Zeit vorgegeben ist.

3. System (100) nach Anspruch 1 oder 2, wobei
die Regeleinrichtung (110) des Weiteren dazu eingerichtet ist, die Heizungseinheit (110) zusätzlich in Abhängigkeit einer Außentemperatur zu steuern.

4. System (100) nach einem der Ansprüche 1 bis 3, wobei

in einem Gebäude mit mehreren zu heizenden Räumen die Regeleinrichtung (110) dazu eingerichtet ist, in Abhängigkeit einer maximalen Solltemperatur $$T_{soll,max} = \max_{n}(T_{n,soll})$$ die Heizungseinheit (110) zu steuern, wobei
$T_{n,soll}$ die Solltemperatur eines Raums (120) n ist, und
das Maximum über die mehreren zu heizenden Räume des Gebäudes ermittelt wird.

5. System (100) nach einem der Ansprüche 1 bis 4, wobei
die Regeleinrichtung (110) dazu eingerichtet ist, die Heizungseinheit (110) zusätzlich in Abhängigkeit eines Typs des mindestens einen Wärmeübertragers (114) zu steuern.

6. Verfahren zum Betreiben einer Heizungseinheit (110) in einem Gebäude mit mehreren zu heizenden Räumen umfassend die Schritte:

Bereitstellen einer Solltemperatur $T_{n,soll}$ für die mehreren zu heizende Räume,
Bereitstellen einer Ist-Temperatur $T_{n,ist}$ für die mehreren zu heizenden Räume,
Ermitteln einer maximalen Differenz mittels der Gleichung

$$\Delta T_{max} = \max_{n} Y(T_{n,soll} - T_{n,ist}; X_n),$$

wobei Y eine Funktion ist in Abhängigkeit von:

der Solltemperatur $T_{n,soll}$ eines Raums (120) n der mehreren zu heizenden Räume,
der Ist-Temperatur $T_{n,ist}$ des Raums (120) n, und
einem Parameter $X_n$, der einen Wert der Fläche des zu heizenden Raums (120) n, einen Wert für ein Volumen des zu heizenden Raums (120) n, einen Wert in Abhängigkeit der Exposition des Raums (120) n, einen Wert in Abhängigkeit einer Wettervorhersage und/oder einen Wert in Abhängigkeit von Wetterdaten umfasst, und
Steuern einer Heizungseinheit (110) in Abhängigkeit der ermittelten maximalen Differenz $\Delta T_{max}$ und zusätzlich in Abhängigkeit der Solltemperatur $T_{n,soll}$ des einen zu heizenden Raums (120) oder der mehreren zu heizenden Räume,
wobei die Heizungseinheit (110) eine Wärmeerzeugungseinheit (115) und eine Wärmeverteilungseinheit (116) umfasst.

7.  Verfahren nach Anspruch 6, wobei
die Solltemperatur $T_{n,soll}$ in Abhängigkeit der Zeit vorgegeben ist.

8.  Verfahren nach Anspruch 6 oder 7, wobei
das Steuern der Heizungseinheit (110) zusätzlich in Abhängigkeit einer Außentemperatur erfolgt.

9.  Verfahren nach einem der Ansprüche 6 bis 8, umfassend den Schritt:

Finden einer maximalen Solltemperatur $T_{soll,max} = \max_{n}(T_{n,soll})$ , wobei:

$T_{n,soll}$ die Solltemperatur eines Raums (120) n ist,
das Maximum über die mehreren zu heizenden Räume des Gebäudes ermittelt wird,
das Steuern der Heizungseinheit (110) zusätzlich in Abhängigkeit der maximalen Solltemperatur $T_{soll,max}$ erfolgt.

10. Verfahren nach einem der Ansprüche 6 bis 9, wobei
das Steuern der Heizungseinheit (110) zusätzlich in Abhängigkeit eines Typs mindestens eines Wärmeübertragers (114) der Heizungseinheit (110) erfolgt.

**Claims**

1.  System (100) for operating a heating unit (111) in a building having a plurality of rooms to be heated, comprising:

at least one heat exchanger (114) per room (120) to be heated,
a heating unit (111) having at least one heat generation unit (115) for heating a carrier medium which flows via a feed line (VL) to the at least one heat exchanger (114) and via a return line (RL) to the heat generation unit (115), and a heat distribution unit (116),
a pump (117) arranged in the feed line (VL) or in the return line (RL) for circulating the carrier medium,
a control device (110) for controlling the heating unit (111),
a plurality of setpoint value transmitters (112) which each provide a setpoint temperature $T_{n,soll}$ for the plurality of rooms to be heated,
at least one temperature sensor (113) per room (120) to be heated for determining an actual temperature $T_{n,ist}$ of the room (120) to be heated,
the control device (110) is set up to control the heating unit (111) as a function of a maximum difference

$$\Delta T_{max} = \max_{n} Y(T_{n,soll} - T_{n,ist}, X_n)$$

and additionally as a function of the setpoint temperature $T_{n,soll}$ of the one room (120) to be heated or of the plurality of rooms to be heated, wherein:
Y is a function as a function of

the setpoint temperature $T_{n,soll}$ of a room (120) n of the plurality of rooms to be heated,
the actual temperature $T_{n,ist}$ of the room (120) n, and
a parameter $X_n$, which comprises a value of the area of the room (120) n to be heated, a value for a volume of the room (120) n to be heated, a value as a function of the exposure of the room (120) n, a value as a function of a weather forecast and/or a value as a function of weather data, and

the maximum over the plurality of rooms to be heated of the building is determined.

2. System (100) according to Claim 1, wherein
the setpoint temperature $T_{n,soll}$ is predefined as a function of time.

3. System (100) according to Claim 1 or 2, wherein
the control device (110) is furthermore set up to control the heating unit (110) additionally as a function of an outside temperature.

4. System (100) according to one of Claims 1 to 3, wherein
in a building having a plurality of rooms to be heated, the control device (110) is configured to control the heating unit (110) as a function of a maximum setpoint temperature $T_{soll,max} = \max\limits_{n}(T_{n,soll})$, wherein:

$T_{n,soll}$ is the setpoint temperature of a room (120) n, and
the maximum over the plurality of rooms to be heated of the building is determined.

5. System (100) according to one of Claims 1 to 4, wherein
the control device (110) is set up to control the heating unit (110) additionally as a function of a type of the at least one heat exchanger (114).

6. Method for operating a heating unit (110) in a building having a plurality of rooms to be heated, comprising the steps of:

providing a setpoint temperature $T_{n,soll}$ for the plurality of rooms to be heated,
providing an actual temperature $T_{n,ist}$ for the plurality of rooms to be heated,
determining a maximum difference by means of the equation

$$\Delta T_{max} = \max\limits_{n} Y(T_{n,soll} - T_{n,ist}; X_n)$$

where Y is a function as a function of:

the setpoint temperature $T_{n,soll}$ of a room (120) n of the plurality of rooms to be heated,
the actual temperature $T_{n,ist}$ of the room (120) n, and
a parameter $X_n$, which comprises a value of the area of the room (120) n to be heated, a value for a volume of the room (120) n to be heated, a value as a function of the exposure of the room (120) n, a value as a function of a weather forecast and/or a value as a function of weather data, and

controlling a heating unit (110) as a function of the determined maximum difference $\Delta T_{max}$ and additionally as a function of the setpoint temperature $T_{n,soll}$ of the one room (120) to be heated or of the plurality of rooms to be heated,
wherein the heating unit (110) comprises a heat generation unit (115) and a heat distribution unit (116).

7. Method according to Claim 6, wherein
the setpoint temperature $T_{n,soll}$ is predefined as a function of time.

8. Method according to Claim 6 or 7, wherein
the heating unit (110) is additionally controlled as a function of an outside temperature.

9. Method according to one of Claims 6 to 8, comprising the step of:

finding a maximum setpoint temperature $T_{soll,max} = \max\limits_{n}(T_{n,soll})$ wherein:

$T_{n,soll}$ is the setpoint temperature of a room (120) n,
the maximum over the plurality of rooms to be heated of the building is determined,
the heating unit (110) is additionally controlled as a function of the maximum setpoint temperature $T_{soll,max}$.

10. Method according to one of Claims 6 to 9, wherein
the heating unit (110) is additionally controlled as a function of a type of at least one heat exchanger (114) of the heating unit (110).

**Revendications**

1. Système (100) pour faire fonctionner une unité de chauffage (111) dans un bâtiment avec plusieurs pièces à chauffer, comprenant :

   au moins un échangeur de chaleur (114) par pièce à chauffer (120),
   une unité de chauffage (111) avec au moins une unité de production de chaleur (115) pour chauffer un milieu porteur qui s'écoule par une allée (VL) vers l'au moins un échangeur de chaleur (114) et par un retour (RL) vers l'unité de production de chaleur (115), et une unité de distribution de chaleur (116),
   une pompe (117) disposée dans l'allée (VL) ou dans le retour (RL) pour faire circuler le milieu porteur,
   un dispositif de régulation (110) pour réguler l'unité de chauffage (111),
   plusieurs émetteurs de valeur de consigne (112) qui mettent à disposition respectivement une température de consigne $T_{n,soll}$ pour les plusieurs pièces à chauffer,
   au moins un capteur de température (113) par pièce à chauffer (120) pour déterminer une température réelle $T_{n,ist}$ de la pièce à chauffer (120), **caractérisé en ce que**
   le dispositif de régulation (110) est conçu pour réguler l'unité de chauffage (111) en fonction d'une différence maximale

   $$\Delta T_{max} \ = \ \max_{n} Y(T_{n,soll} \ - \ T_{n,ist}, X_n)$$

   et en outre en fonction de la température de consigne $T_{n,soll}$ de la pièce à chauffer (120) ou des plusieurs pièces à chauffer, dans lequel :
   Y est une fonction en fonction de

   la température de consigne $T_{n,soll}$ d'une pièce (120) n des plusieurs pièces à chauffer,
   la température réelle $T_{n,ist}$ de la pièce (120) n, et
   un paramètre $X_n$, qui comprend une valeur de la surface de la pièce à chauffer (120) n, une valeur pour un volume de la pièce à chauffer (120) n, une valeur en fonction de l'exposition de la pièce (120) n, une valeur en fonction d'une prévision météorologique et/ou une valeur en fonction de données météorologiques, et

   le maximum est déterminé sur les plusieurs pièces à chauffer du bâtiment.

2. Système (100) selon la revendication 1, dans lequel
   la température de consigne $T_{n,soll}$ est prédéfinie en fonction du temps.

3. Système (100) selon la revendication 1 ou 2, dans lequel
   le dispositif de régulation (110) est en outre conçu pour réguler l'unité de chauffage (110) en outre en fonction d'une température extérieure.

4. Système (100) selon l'une quelconque des revendications 1 à 3, dans lequel

   dans un bâtiment avec plusieurs pièces à chauffer, le dispositif de régulation (110) est conçu pour, en fonction d'une température de consigne maximale, $T_{soll,max} \ = \ \max_{n}(T_{n,soll})$ commander l'unité de chauffage (110), dans lequel
   $T_{n,soll}$ est la température de consigne d'une pièce (120) n, et
   le maximum est déterminé sur les plusieurs pièces à chauffer du bâtiment.

**5.** Système (100) selon l'une quelconque des revendications 1 à 4, dans lequel
le dispositif de régulation (110) est conçu pour réguler l'unité de chauffage (110) en outre en fonction d'un type de l'au moins un échangeur de chaleur (114).

**6.** Procédé pour faire fonctionner une unité de chauffage (110) dans un bâtiment avec plusieurs pièces à chauffer, comprenant les étapes suivantes :

mise à disposition d'une température de consigne $T_{n,soll}$ pour les plusieurs pièces à chauffer,
mise à disposition d'une température réelle $T_{n,ist}$ pour les plusieurs pièces à chauffer,
détermination d'une différence maximale au moyen de l'équation

$$\Delta T_{max} = \max_{n} Y(T_{n,soll} - T_{n,ist}; X_n)$$

dans lequel Y est une fonction en fonction de :

la température de consigne $T_{n,soll}$ d'une pièce (120) n des plusieurs pièces à chauffer,
la température réelle $T_{n,ist}$ de la pièce (120) n, et
un paramètre $X_n$, qui comprend une valeur de la surface de la pièce à chauffer (120) n, une valeur pour un volume de la pièce à chauffer (120) n, une valeur en fonction de l'exposition de la pièce (120) n, une valeur en fonction d'une prévision météorologique et/ou une valeur en fonction de données météorologiques, et

régulation d'une unité de chauffage (110) en fonction de la différence maximale déterminée $\Delta T_{max}$ et en outre en fonction de la température de consigne $T_{n,soll}$ de la pièce à chauffer (120) ou des plusieurs pièces à chauffer, dans lequel l'unité de chauffage (110) comprend une unité de production de chaleur (115) et une unité de distribution de chaleur (116).

**7.** Procédé selon la revendication 6, dans lequel
la température de consigne $T_{n,soll}$ est prédéfinie en fonction du temps.

**8.** Procédé selon la revendication 6 ou 7, dans lequel
la régulation de l'unité de chauffage (110) s'effectue en outre en fonction d'une température extérieure.

**9.** Procédé selon l'une quelconque des revendications 6 à 8, comprenant l'étape suivante :
trouver une température de consigne maximale $T_{soll,max} = \max_{n}(T_{n,soll})$, où :

$T_{n,soll}$ est la température de consigne d'une pièce (120) n,
le maximum est déterminé sur les plusieurs pièces à chauffer du bâtiment,
la régulation de l'unité de chauffage (110) s'effectue en outre en fonction de la température de consigne maximale $T_{soll,max}$.

**10.** Procédé selon l'une quelconque des revendications 6 à 9, dans lequel
la régulation de l'unité de chauffage (110) s'effectue en outre en fonction d'un type d'au moins un échangeur de chaleur (114) de l'unité de chauffage (110).

**Fig. 1**

**Fig. 2**

**Fig. 3a**

300a

300b

RL

| 114a | 119b |
|------|------|
| Wärme-übertrager | Stellmotor |

RL                RL

| Wärme-übertrager | 114d |
|------------------|------|
| 114c | Wärme-übertrager |

| 119a | 114b |
|------|------|
| Stellmotor | Wärme-übertrager |

124a

| Heizkreisverteiler |

| Verteiler | 125a |

Schwerkraftbremse — 123

118

| Mischer |

| PUMPE | 117c |

VL                    VL

| Wärmeerzeugungseinheit | 115 |

RL

117a

| PUMPE |

RL

**Fig. 3b**

S401 — Bereitstellen eines oder mehrerer Temperatursollwerte $T_{n,soll}$ für einen oder mehrere zu heizende Räume

S402 — Bereitstellen einer Ist-Temperaturen $T_{n,ist}$ für die einen oder mehreren zu heizende Räume

S403 — Ermitteln einer Differenz $\Delta T_n$ zwischen einem Temperatursollwert $T_{n,soll}$ eines zu heizenden Raums der einen oder mehreren zu heizenden Räume und der Ist-Temperatur des zu heizenden Raums

S404 — Steuern einer Heizungseinheit in Abhängigkeit der ermittelten Differenz $\Delta T_n$

**Fig. 4**

S401 — Bereitstellen eines oder mehrerer Temperatursollwerte $T_{n,soll}$ für einen oder mehrere zu heizende Räume

S402 — Bereitstellen einer oder mehrerer Ist-Temperaturen $T_{n,ist}$ für die einen oder mehreren zu heizenden Räume

S403 — Ermitteln einer Differenz $\Delta T_n$ zwischen einem Temperatursollwert $T_{n,\,soll}$ eines zu heizenden Raums der einen oder mehreren zu heizenden Räume und der Ist-Temperatur des zu heizenden Raums

S503 — Ermitteln einer maximalen Differenz $\Delta T_{max}$ unter den Differenzen $\Delta T_n$

S404c — Steuern einer Heizungseinheit in Abhängigkeit der maximalen Differenz $\Delta T_{max}$

**Fig. 5**

S401a — Bereitstellen eines oder mehrerer Temperatursollwerte $T_{n, soll}$ für einen oder mehrere zu heizende Räume in Abhängigkeit der Zeit

S402 — Bereitstellen einer Ist-Temperaturen $T_{n,ist}$ für die einen oder mehreren zu heizende Räume

S501 — Bereitstellen einer Außentemperatur

S403 — Ermitteln einer Differenz $\Delta T_n$ zwischen einem Temperatursollwerte $T_{n,soll}$ eines zu heizenden Raums der einen oder mehreren zu heizenden Räume und der Ist-Temperatur des zu heizenden Raums

S404a — Steuern einer Heizungseinheit in Abhängigkeit der ermittelten Differenz $\Delta T_n$ und zusätzlich in Abhängigkeit der Außentemperatur und/oder in Abhängigkeit eines Temperatursollwerts der einen oder mehreren Temperatursollwerte $T_{n,soll}$

**Fig. 6**

S401a —⌐ Bereitstellen eines oder mehrerer Temperatursollwerte $T_{n,soll}$ für einen oder mehrere zu heizende Räume in Abhängigkeit der Zeit

S402 —⌐ Bereitstellen einer Ist-Temperatur $T_{n,ist}$ für die einen oder mehreren zu heizenden Räume

S501 —⌐ Bereitstellen einer Außentemperatur

S502 —⌐ Ermitteln eines maximalen Temperatursollwerts $T_{soll,max}$

S403 —⌐ Ermitteln einer Differenz $\Delta T_n$ zwischen einem Temperatursollwerte $T_{n,soll}$ eines zu heizenden Raums der einen oder mehreren zu heizenden Räume und der Ist-Temperatur des zu heizenden Raums

S503 —⌐ Ermitteln einer maximalen Differenz $\Delta T_{max}$

S404b —⌐ Steuern einer Heizungseinheit in Abhängigkeit der maximalen Differenz $\Delta T_{max}$ und zusätzlich in Abhängigkeit der Außentemperatur und in Abhängigkeit des maximalen Temperatursollwerts $T_{soll,max}$

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19710853 A1
- EP 2555074 A1
- DE 4339802 A1
- WO 2012095558 A1
- DE 102017203850 A1